Europäisches Patentamt

European Patent Office

Office européen des brevets

(11) Veröffentlichungsnummer: **0 359 167**

**A2**

## EUROPÄISCHE PATENTANMELDUNG

(21) Anmeldenummer: **89116738.9**

(51) Int. Cl.⁵ **G01N 21/43**

(22) Anmeldetag: **09.09.89**

(30) Priorität: **15.09.88 DE 3831346**

(43) Veröffentlichungstag der Anmeldung:
**21.03.90 Patentblatt 90/12**

(84) Benannte Vertragsstaaten:
**CH DE FR GB IT LI**

(71) Anmelder: **Firma Carl Zeiss**

**D-7920 Heidenheim (Brenz)(DE)**

(84) **CH DE FR IT LI**

Anmelder: **CARL-ZEISS-STIFTUNG trading as CARL ZEISS**

**D-7920 Heidenheim (Brenz)(DE)**

(84) **GB**

(72) Erfinder: **Hohberg, Gerhard, Dr.**
**Hornbergstrasse 13**
**D-7080 Aalen-Dewangen(DE)**
Erfinder: **Schlemmer, Harry, Dr.**
**Einsteinstrasse 16**
**D-7082 Oberkochen(DE)**

(54) **Refraktometer mit brechzahlabhängiger Aperturteilung.**

(57) Beschrieben wird ein Refraktometer mit einem Meßprisma, welches eine Meßfläche hat, die in bekannter Art durch ein Lichtstrahlbündel unter einem solchen Winkelbereich beleuchtet wird, daß auch der Grenzwinkel für Totalreflexion in ihm enthalten ist. Bei der von der Meßfläche reflektierten Strahlung wird jedoch nicht die örtliche Lage der Hell-dunkel-Grenze ermittelt, sondern die reflektierte Strahlung wird auf einen Empfänger bzw. eine Empfängerfläche fokussiert und über eine Intensitätsmessung wird die Aperturteilung durch den brechzahlabhängigen Grenzwinkel für Totalreflexion erfaßt.

Fig.1

## Refraktometer mit brechzahlabhängiger Aperturteilung

Die vorliegende Erfindung betrifft ein Refraktometer, bestehend aus einem Meßprisma mit einer Meßfläche, welche in optischem Kontakt mit der zu messenden Probe steht, einer Beleuchtungseinrichtung mit einem Lichtstrahlbündel, das unter einem solchen Winkelbereich auf die Meßfläche fällt, daß auch der Grenzwinkel für Totalreflexion in ihm enthalten ist, sowie einem lichtelektrischen Empfänger.

Ein derartiges Gerät ist z.B. aus der DE-AS 1 266 016 bekannt. Bei diesem beleuchtet das von der Meßfläche reflektierte Lichtbündel, dessen eine Winkelbegrenzung als Hell-dunkel-Grenze vom brechzahlabhängigen Grenzwinkel der Totalreflexion abhängig ist, zwei Photozellen, die je nach der Lage dieser Hell-dunkel-Grenze unterschiedlich stark belichtet werden. Eine Vergleichsphotozelle wird immer vom reflektierten Licht getroffen und eine weitere Vergleichsphotozelle empfängt immer lediglich Streulicht.

Ein derartiges Refraktometer hat nur dann eine scharfe Hell-dunkel-Grenze, wenn mit monochromatischem Licht gemessen wird, oder wenn - bei Beleuchtung mit weißem Licht - ein sog. Kompensator zur Kompensation der Dispersion des weißen Lichtes verwendet wird (Abbe-Refraktometer). Zur Messung des Brechzahlverlaufes (Brechzahl als Funktion der Wellenlänge) ist ein derartiges Refraktometer nicht geeignet. Es hat außerdem den Nachteil, daß alle zur Messung notwendigen Teile in unmittelbarer Nähe des Meßprismas angeordnet sind.

Die Aufgabe der vorliegenden Erfindung ist daher, ein Refraktometer zu schaffen, das möglichst einfach im Aufbau ist, bei dem möglichst wenige Teile in der Nähe des Meßprismas sein müssen und das auch zur Messung des Brechzahlverlaufes geeignet ist.

Die gestellte Aufgabe wird ausgehend von einem im Oberbegriff des Anspruches 1 angegebenen Aufbau erfindungsgemäß dadurch gelöst, daß das von der Meßfläche reflektierte Licht durch optische Mittel auf einen Empfänger bzw. eine Empfängerfläche fokussiert wird.

Im Gegensatz zur bekannten Bestimmung der Brechzahl durch Ermittlung des Grenzwinkels der Totalreflexion bzw. der örtlichen Lage der Hell-dunkel-Grenze der von der Meßfläche reflektierten Strahlung, wird bei der erfindungsgemäßen Lösung die brechzahlabhängige Aperturteilung durch die Fokussierung der reflektierten Strahlung auf einen Empfänger bzw. eine Empfängerfläche als Intensitätsänderung gemessen und ausgewertet. Da für jede Wellenlänge der Strahlung entsprechend der zu ihr gehörenden Brechzahl eine Aperturteilung erfolgt, die unabhängig von der Aperturteilung der anderen Wellenlängen ist, läßt sich mit Hilfe eines Spektrometers auch der Brechzahlverlauf messen.

Vorteilhaft ist dabei die Verwendung eines Diodenzeilenspektrometers, das eine simultane Messung des Brechzahlverlaufes in einem großen Spektralbereich erlaubt.

Besonders vorteilhaft ist es, das Spektrometer über eine Lichtleiter mit dem Meßkopfgehäuse zu verbinden, wobei die Eintrittsfläche des Lichtleiters als Empfängerfläche dient, auf der das vom Meßprisma reflektierte Licht fokussiert wird. In diesem Fall ist es zweckmäßig, auch die zur Beleuchtung dienende Lichtquelle vom Meßkopfgehäuse zu trennen und über einen Lichtleiter mit ihm zu verbinden.

Weitere vorteilhaft Ausgestaltungen der Erfindung gehen aus den Unteransprüchen und den Erläuterungen zu den Figuren hervor.

Besondere Vorteile der Erfindung sind, daß das Meßkopfgehäuse sehr kompakt aufgebaut sein kann, daß keine beweglichen Teile notwendig sind und daß das Meßkopfgehäuse explosionsgeschützt ist, da in ihm keine elektrischen Spannungen und keine große optische Leistungen notwendig sind.

Die Erfindung wird im folgenden anhand von in den Figuren 1 bis 3 dargestellten Ausführungsbeispielen näher erläutert. Dabei zeigen

Figur 1 eine Anordnung mit einem divergent auf die Meßfläche auftreffenden Strahlengang;

Figur 2 eine Anordnung mit einem konvergent auf die Meßfläche auftreffenden Strahlengang und

Figur 3 ein Ausführungsbeispiel, bei dem ein Beobachtungsfenster Teile des Meßprismas ist.

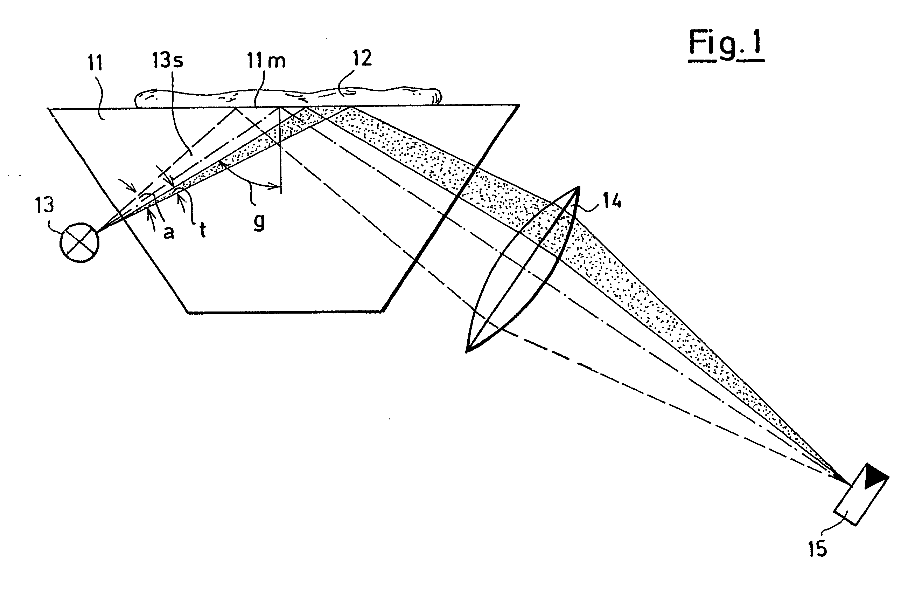

In Figur 1 ist mit (11) ein Meßprisma bezeichnet auf dessen Meßfläche (11m) die Probe (12) aufgebracht ist, deren Brechzahl gemessen wird. Die Meßfläche (11m) wird durch das von der Lichtquelle (13) divergent ausgehende Strahlenbündel (13s) beleuchtet. Die geometrischen Abmessungen werden dabei so gewählt, daß in dem Winkelbereich (a) des divergenten Strahlenbündels (13s) auch der Grenzwinkel (g) für Totalreflexion enthalten ist, der sich aus der Beziehung

$$\sin (g) = n / N$$

ergibt, wobei N die Brechzahl des Meßprismas (11) und n die Brechzahl der Probe (12) ist. Die von der Meßfläche (11m) reflektierte Strahlung wird nach dem Austritt aus dem Meßprisma (11) durch das Objektiv (14) auf den Empfänger (15) fokussiert.

Diejenigen Strahlen der Lichtquelle (13) welche auf die Meßfläche (11m) unter einem Winkel auftreffen, der größer ist als der von der Brechzahl n der Probe (12) abhängige Grenzwinkel (g) der Totalreflexion werden an der Meßfläche (11m) totalreflektiert, während die übrigen Strahlen in die Probe (12) mit geringen Reflexionsverslusten gemäß den Fresnel'schen Formeln eintreten und dadurch nicht zum Empfänger (15) gelangen. Es erfolgt als eine Aperturteilung. In der Figur 1 ist derjenige Teil der Apertur, in welchem die Strahlen totalreflektiert werden, punktiert ausgefüllt.

Entsprechend dem jeweiligen Brechzahlverhältnis n N wird also ein charakterististischer Teil (t) der von der Lichtquelle ausgehenden Apertur (a) an der Meßfläche (11m) reflektiert und auf den Empfänger (15) fokussiert. Der auf den Empfänger auftreffende brechzahlabhängige Aperturteil und damit die vom Empfänger gemessene Intensität ist daher ein direktes Maß für die Brechzahl n der Probe (12). Verwendet man als Lichtquelle (13) einen Kontinuumstrahler und als Empfänger z.B. ein Diodenzeilenspektrometer, dann lassen sich simultan die Brechzahlquotienten n (λ) / N (λ) in einem großen Spektralbereich bestimmen, indem das wellenlängenabhängige Reflexionsvermögen R (λ) der Meßfläche gemessen wird, das über eine Eichkurve in die Dispersionskurve n (λ) umgerechnet werden kann.

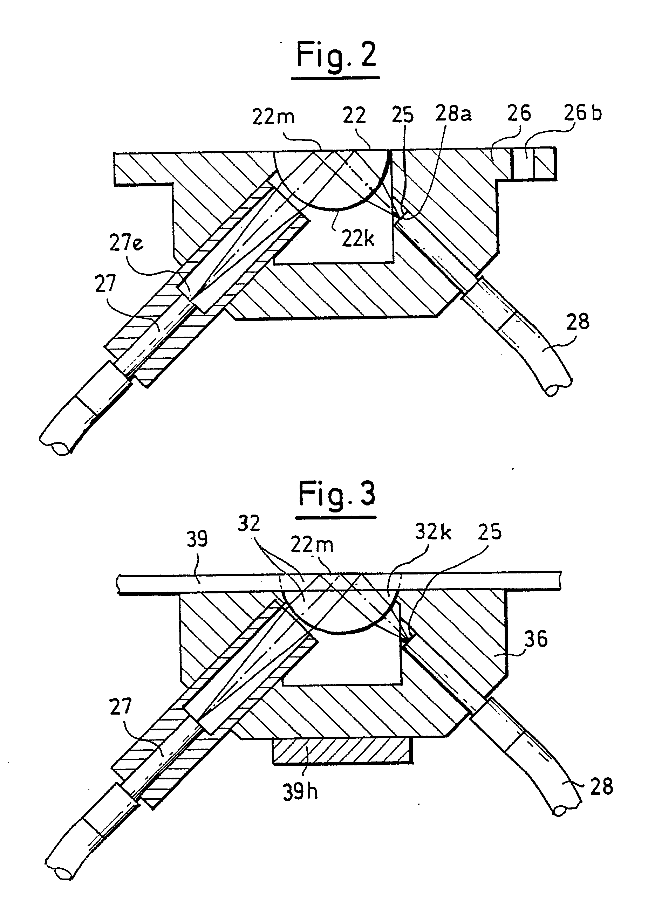

Die in der Figur 1 dargestellte Anordnung ist jedoch - ebenso wie die in den Figuren 2 und 3 dargestellten Anordnungen - auch für die Messung bei nur einer oder wenigen Wellenlängen geeignet. In diesem Fall kann als Lichtquelle z.B. eine Leuchtdiode oder ein Linienstrahler verwendet werden. Dabei kann vor oder nach dem Meßprisma ein Filter oder eine Wechseleinrichtung mit mehreren Filtern angeordnet sein. In diesen Fällen kann also Empfänger eine Photodiode verwendet werden.

Wenn als Empfänger ein Diodenzeilenspektrometer verwendet wird, um den Brechzahlverlauf aufzunehmen, dann wird an der Stelle des Empfängers (15) in Figur 1 entweder der Eingangsspalt des Spektrometers oder - in einer besonders vorteilhaften Ausge staltung der Erfindung - die Eingangsfläche eines Lichtleiters, der zum Spektrometer führt, angeordnet. Letztere Ausgestaltung der Erfindung ist in der Figur 2 dargestellt, in der zugleich gezeigt wird, daß das auf die Meßfläche auftreffende Lichtbündel auch konvergent sein kann. Außerdem ist in Figur 2 auch die Lichtquelle über eine Lichtleiter (27) mit dem μeßprisma verbunden.

Das in Figur 2 dargestellte Meßprisma (22) hat die Form einer Halbkugel; daher werden keine weiteren optischen Teile benötigt. Mit (22m) ist die plane Meßfläche des Meßprismas bezeichnet, welche in einem Meßkopfgehäuse (26) befestigt ist, das an seinem flanschartigen Rand mit Bohrungen (26b) zur Befestigung ausgebildet ist.

Der Lichtleiter (27) führt zu einem nicht gezeichneten Lampengehäuse, in dem z.B. eine Xenon-, Halogen-, Deuterium- oder Metalldampflampe enthalten ist. Die Endfläche (27e) des Lichtleiters, dessen Kern z.B. einen Durchmesser von 200 μm hat, dient als kalte Punktlichtquelle. Sie ist in einem Abstand von der Kugelfläche (22k) angeordnet, der größer ist als deren Brennweite, so daß der Strahlenverlauf im Inneren der Halbkugel konvergent ist. Durch die kugelförmige Oberfläche (22k) des Meßprismas (22m) wird die Endfläche (27e) des Lichtleiters (27) in die Empfängerfläche (25) abgebildet. Dort ist die Anfangsfläche (28a) des Lichtleiters (28) angeordnet , der einen Kerndurchmesser von z.B. 600 μm hat und zu einem nicht gezeichneten Diodenzeilenspektrometer führt. Die Anschlüsse der Lichtleiter (27) und (28) am Lampengehäuse und Diodenzeilenspektrometer erfolgen in der z.B. aus der DE-OS 3 701 721 bekannten Art.

Zur Messung können flüssige, pastöse oder feste Substanzen verwendet werden, wobei letztere eine plane Fläche haben müssen, die mit einer Flüssigkeit, deren Brechzahl gleich oder größer ist als die Brechzahl N des Meßprismas, in optischen Kontakt mit der Meßfläche gebracht werden.

In der Figur 3 ist ein Ausführungsbeispiel für die Messung der Brechzahl oder des Brechzahlverlaufes an einer Substanz, die sich in einem Reaktionsgefäß befindet, dargestellt. Dabei bildet der mit dem Meßkopfgehäuse (36) fest verbunden Kugelabschnitt (32k) zusammen mit dem Beobachtungsfenster (39) des Reaktionsgefäßes die Halbkugel des Meßprismas (32), so daß die Meßfläche (32m) an der dem Kugelabschnitt abgewandten Seite des Beobachtungsfensters liegt. Kugelabschnitt (32k) und Beobachtungsfenster (39) werden zweckmäßigerweise aus derselben Glassorte hergestellt, so daß sie gleiche Brechzahl und Brechzahlverlauf haben. Sie werden in Kontakt gebracht durch eine Halterung (39h), welche das Meßkopfgehäuse (36) mit dem Kugelabschnitt (32k) gegen das Beobachtungsfenster (39) drückt. Der optische Kontakt wird z.B. durch eine geeignete Flüssigkeit mit ausreichend hoher Brechzahl oder durch Ankitten erreicht.

Bei der Messung ist es empfehlenswert, zunächst gegen Luft oder eine Vergleichsprobe mit bekannter Brechzahl bzw. bekanntem Brechzahlverlauf zu messen und damit alle gerätespezifischen Eigenschaften zu erfassen, die in die Messung eingehen. Anschließend werden mehrere Substanzen oder Substanzgemische gemessen, deren Brechzahlen bzw. Brechzahlverläufe bekannt und über den interessierenden Brechzahlbereich günstig verteilt sind. Die dabei erhaltenen Intensitätswerte werden - unter Berücksichtigung der Werte für Luft oder für die Vergleichsprobe durch Quotientenbildung - zur Kalibrierung der Anordnung verwendet. Eine derartige Kalibrierung der Brechzahlskala gegebenenfalls in ihrer Wellenlängenabhängigkeit ist nur in größeren Zeitabständen erforderlich, während die Messung gegen Luft oder eine Vergleichsprobe zweckmäßigerweise öfters durchgeführt wird.

## Ansprüche

1. Refraktometer, bestehend aus einem Meßprisma mit einer Meßfläche, welche in optischem Kontakt mit der zu messenden Probe steht, einer Beleuchtungseinrichtung mit einem Lichtstrahlbündel, das unter einem solchen Winkelbereich auf die Meßfläche fällt, daß auch der Grenzwinkel für Totalreflexion in ihm enthalten ist, sowie einem lichtelektrischen Empfänger, dadurch gekennzeichnet, daß das von der Meßfläche reflektierte Licht durch optische Mittel (14,22k,32k) auf einen Empfänger (15) bzw. eine Empfängerfläche (25) fokussiert wird.

2. Refraktometer nach Anspruch 1, dadurch gekennzeichnet, daß ein Beobachtungsfenster (39) Teil des Meßprismas (32) ist.

3. Refraktometer nach Anspruch 1 oder 2, dadurch gekennzeichnet, daß die Lichtquelle (13) ein Kontinuumstrahler ist und daß die Empfängerfläche (25) der Eintrittsspalte eines Spektrometers ist.

4. Refraktometer nach Anspruch 1 oder 2, dadurch gekennzeichnet, daß die Lichtquelle (13) ein Kontinuumstrahler ist, der über einen Lichtleiter (27) mit dem Meßkopfgehäuse (26) verbunden ist, und daß die Empfängerfläche (25) über einem Lichtleiter (28) mit einem Spektrometer verbunden ist.

5. Refraktometer nach Anspruch 1 oder 2, dadurch gekennzeichnet, daß die Lichtquelle (13) eine Leuchtdiode oder ein Linienstrahler ist.

6. Refraktometer nach Anspruch 5, dadurch gekennzeichnet, daß vor oder nach dem Meßprisma (12) ein Filter oder eine Wechseleinrichtung mit mehreren Filtern angeordnet ist.

7. Refraktometer nach Anspruch 5, dadurch gekennzeichnet, daß der Empfänger (15) eine Photodiode ist.

Fig.1

EP 0 359 167 A2

# Fig. 2

# Fig. 3